# EUROPÄISCHE PATENTSCHRIFT

(11) **EP 2 098 326 B1**
(45) Veröffentlichungstag und Bekanntmachung des Hinweises auf die Patenterteilung: **06.01.2016**
(21) Anmeldenummer: 08012008.2
(22) Anmeldetag: 03.07.2008
(51) Int. Cl.: B23K 20/12, B23K 20/227, B23K 103/18, B23K 103/06, B23K 103/04

(54) **Verfahren zur Herstellung eines metallischen Bauteils, hergestelltes Bauteil und Verwendung des Bauteils**
Method for producing a metallic component, manufactured component and use of the component
Procédé de fabrication d'un composant, composant ainsi produit et son utilisation

(30) Priorität: 03.03.2008 EP 08003924
(43) Veröffentlichungstag der Anmeldung: 09.09.2009
(73) Patentinhaber: Ford Global Technologies, LLC, Dearborn, MI 48126 (US)
(72) Erfinder: Broda, Maik, 52249 Eschweiler (DE); Hallfeldt, Torsten, 52249 Eschweiler (DE); Fischer, Alfons, 45239 Essen (DE); Hahn, Mareike, 40223 Düsseldorf (DE); dos Santos, Jorge, 21395 Tespe (Avendorf) (DE); Beyer, Matthias, 21391 Reppenstedt (DE)
(74) Vertreter: Von Rohr Patentanwälte Partnerschaft mbB

(56) Entgegenhaltungen:
- JP-A- 2000 288 747
- JP-A- 2002 113 583
- JP-A- 2004 001 087
- US-A- 2 399 356

## Beschreibung

Die vorliegende Erfindung betrifft ein Verfahren zur Herstellung eines metallischen Bauteils, insbesondere eines Werkzeugs, gemäß dem Oberbegriff des Anspruchs 1, ein metallisches Bauteil, insbesondere Werkzeug, gemäß dem Oberbegriff des Anspruchs 6 sowie eine Verwendung eines derartigen Bauteils gemäß Anspruch 12.

Metallisch hoch beanspruchte Bauteile, wie Werkzeuge, werden für verschiedene Zwecke eingesetzt, insbesondere als Umformwerkzeuge bei der Blechbearbeitung in der Automobilindustrie. Derartige Umformwerkzeuge weisen üblicherweise einen Grundwerkstoff oder Grundkörper aus Guß oder Stahl auf. Aufgrund des über die Lebensdauer auftretenden Verschleißes und/oder zur Anpassung ist oftmals wiederholt ein Austausch oder Bearbeiten der Werkzeuge bzw. Bauteile - nämlich ein Neuherstellen, Ändern, Reparieren, Beschichten oder dergleichen, bei der vorliegenden Erfindung einfach "Herstellen" genannt - erforderlich.

Derzeit sind zum Herstellen einer Beschichtung bzw. zum Reparieren und Aufbringen von Schichten, Zusatzwerkstoffen, Auftragungen etc. bei einem solchen Werkzeug insbesondere folgende Schritte erforderlich: Ausbau des Werkzeugs, Transport zum Fräsen, Aufspannen und Einrichten, Fräsen, Abspanen, Transport zum Schweißen, Auftragsschweißen (z. T. mit Vorwärmung und Schweißung einer Pufferlage), Transport zum Schleifen, Aufspannen und Einrichten, Schleifen, Abspanen, Transport zur Fertigungslinie sowie Einbau. Diese Schritte führen neben den eigentlichen Fertigungszeiten beim Fräsen, Auftragschweißen und Schleifen zu teilweise erheblichen Neben- und Totzeiten.

Darüber hinaus wird der Grundwerkstoff bzw. Grundkörper des Werkzeugs, der aus Sphäroguß, beispielsweise GJS, gefertigt sein kann, durch die beim Schweißprozeß eingebrachte Wärme im Gefüge und in seinen Eigenschaften verändert. Um Risse oder zu hohe Eigenspannungen zu vermeiden, müssen große Werkzeuge, deren Abmessungen oft im Meterbereich liegen, daher zusätzlich vorgewärmt werden. Des Weiteren sind entsprechende Schweißzusatzwerkstoffe für eine Puffer- und Funktionsschicht notwendig, um eine langfristig festhaftende Verbindung zum Grundwerkstoff und eine verschleißbeständige Oberfläche zu gewährleisten.

Alternative Lösungen wie CVD- oder PVD-Beschichtungen auf Stahl sind technisch zwar möglich, werden jedoch nur begrenzt eingesetzt. Der Grund liegt in der Notwendigkeit, variable Korrekturen während der Produktionslaufzeit durchführen zu können, was mit CVD- oder PVD-Dünnschichten nicht möglich ist. Nur durch die hohe Variationsmöglichkeit von Korrekturen wird eine gewünschte Optimierung zwischen kostengünstigen und bearbeitbaren Werkstoffen und dem Ausreizen von werkstoffseitigen Grenzbereichen bzw. werkstoffseitiger Grenzbelastung, Verschleiß sowie einer möglichst kostengünstigen Herstellung / Bearbeitbarkeit ermöglicht.

Aus der DE 100 18 822 A2 ist es bekannt, zwei Teile eines Werkzeugs durch Reibschweißen miteinander zu verbinden.

Die US 6,471,113 B1 und die EP 1 036 939 A1 offenbaren das Aufbringen einer Beschichtung aus einem weicheren Metall durch Reibauftragsschweißen auf die Arbeitsoberfläche eines Maschinenteils, insbesondere für einen Kompressor.

Die US 7,225,969 B2 betrifft eine plastische Oberflächenbearbeitung eines Werkstücks, wobei ein rotierendes Werkzeug auf die rotierende Werkzeugoberfläche gedrückt wird.

Die US 2,399,356 A offenbart das Verbinden von Metallplatten durch Reibschweißen.

Die JP 2002113583 A, JP 2000288747 A und die JP 2004001087 A betreffen eine Reibschweißverbindung eines Gussteils mit einem Stahlteil.

Die DE 100 18 822 A1 betrifft einen Stanzstempel, der durch Reibschweißen aus einem niedrig legiertem Teil und einem höher legierten Teil gefügt wird.

Die US 6,471,113 B1 betrifft ein Verfahren zur Beschichtung eines Bauteils. Das Bauteil wird mit einem weicheren Bauteil durch Reibschweißen verbunden und das entstandene Teil danach derart getrennt, so dass eine weichere Schicht auf dem härteren Bauteil verbleibt.

In der EP 1 036 939 A1 wird ein Verfahren zum Aufbringen von weichen Filmen auf härtere Bauteile mittels Reibschweißen beschrieben.

Die US 7,225,969 B2 offenbart ein Verfahren zur Oberflächenmodifikation durch Wärmebehandlung, wobei die Wärme durch Reibung eines harten Rotationselements gegen die entsprechende Oberfläche erzeugt wird.

Der vorliegenden Erfindung liegt die Aufgabe zugrunde, ein Verfahren zur Herstellung eines metallischen Bauteils, insbesondere eines Werkzeugs, ein metallisches Bauteil, insbesondere ein Werkzeug, sowie eine Verwendung eines derartigen Bauteils anzugeben, wobei der Herstellungs- bzw. Bearbeitungsaufwand reduziert werden kann, wobei auf eine Pufferlage zwischen Beschichtung und Grundwerkstoff verzichtet werden kann, wobei neue Werkstoffkombinationen ermöglicht werden und/oder wobei die thermische Belastung des Grundwerkstoffs minimiert werden kann.

Die obige Aufgabe wird durch ein Verfahren gemäß Anspruch 1, ein metallisches Bauteil gemäß Anspruch 6 oder eine Verwendung gemäß Anspruch 12 gelöst. Vorteilhafte Weiterbildungen sind Gegenstand der Unteransprüche.

Die grundlegende Idee der vorliegenden Erfindung liegt darin, durch Reibauftragsschweißen eine Beschichtung aus einem zweiten metallischen Material auf einen Grundwerkstoff bzw. einen Grundkörper aus einem ersten metallischen Material aufzubringen, wobei das zweite Material härter und/oder verschleißbeständiger als das erste Material ist. Dies führt zu verschiedenen Vorteilen, insbesondere gegenüber LIS 2,399,356 A die den nächstliegenden Stand der Technik offenbart und gegenüber den bisher üblichen Schmelzauftragsschweißverfahren.

Die vorliegende Erfindung sieht vor, einen verschleißbeständigen Werkstoff (das zweite Material) über einen Warmverformungsprozeß (Reibauftragsschweißen) in einem Schritt auf den Grundkörper bzw. Grundwerkstoff aufzutragen. Die notwendigen Materialeigenschaften (verformbar) des zweiten Materials stehen eigentlich im Widerspruch zu den Gebrauchseigenschaften (verschleißbeständiger und/oder härter als das erste Material bzw. der Grundkörper) zu sein. Erste Versuche haben jedoch gezeigt, daß die vorschlagemäße Beschichtung mit dem zweiten Material zu sehr guten Werkzeugeigenschaften bei geringem Aufwand führt.

Die vorschlagsgemäße Lösung reduziert die Wärmeeinbringung und somit auch den Verzug und Eigenspannungen im Bauteil. Es entsteht nur eine kleine Wärmeeinflußzone. Ein Vorwärmen des Bauteils kann entfallen. Der Aufmischungsgrad des Grundwerkstoffs ist minimal. Ein Abbrand von Legierungselementen des Beschichtungswerkstoffs wird minimiert oder vermieden.

Die vorschlagsgemäße Lösung gestattet eine Verfeinerung der Struktur des Beschichtungswerkstoffs mit der Folge verbesserter mechanischer Eigenschaften, insbesondere verbesserter Verschleißbeständigkeit.

Die vorschlagsgemäße Lösung sieht einen quasi rein mechanischen Prozeß vor, wodurch eine besonders gute Reproduzierbarkeit und Prozeßstabilität verhältnismäßig einfach erreichbar ist.

Vorhandene Fertigungsmaschinen, wie Fräsmaschinen, Manipulatoren o. dgl., können für die vorschlagsgemäße Lösung eingesetzt werden.

Das Reibauftragsschweißen kann in einer Werkzeugmaschine zum Fräsen und/oder Schleifen durchgeführt werden. Dementsprechend vereinfacht sich bereits dadurch der bisherige Verfahrensablauf bei der nachträglichen Aufbringung oder Erneuerung der Beschichtung, wie oben beschrieben, wesentlich. In einer Maschine bzw. Aufspannung können sowohl der Werkstoffauftrag durch Reibauftragsschweißen als auch die Vor- und Nachbearbeitung (Schleifen, Fräsen) erfolgen, da nur mechanische Prozesse eingesetzt werden. Insbesondere müssen die Bauteile bzw. Werkzeuge nicht mehr bewegt und umgespannt werden. Vielmehr kann der gesamte Bearbeitungsprozeß in einer Maschine erfolgen.

Jedoch kann die vorschlagsgemäße Lösung auch direkt am eingebauten Bauteil bzw. Werkzeug umgesetzt werden, wodurch sich der Aufwand nochmals reduziert, da insbesondere ein Ausbau und Wiedereinbau des Bauteils bzw. Werkzeugs nicht erforderlich sind. Insbesondere ist die Notwendigkeit der Abstützung der großen Reaktionskräfte durch entsprechende stabile mechanische Systeme bei großen Werkzeugen unproblematisch, da diese Werkzeuge ohnehin ausreichend mechanisch abgestützt sind.

Die vorschlagsgemäße Lösung gestattet eine Verlängerung der Standzeit, insbesondere bei Blechumformwerkzeugen.

Die vorschlagsgemäße Lösung gestattet ein flexibles Anpassen von Werkzeugen, insbesondere besonders flexible Verschleißreparaturen.

Die vorschlagsgemäße Lösung gestattet die Verringerung von Neben- und Totzeiten im Produktionsablauf, insbesondere bei Berücksichtigung erforderlicher Reparaturen, Änderungen u. dgl. über den Lebenszyklus eines Werkzeugs.

Die vorschlagsgemäße Lösung gestattet die Verbindung von nicht "schmelzschweißgeeigneten" Werkstoffen bzw. neue Materialkombinationen.

Die vorschlagsgemäße Lösung ermöglicht die Verwendung von alternativen Werkzeugwerkstoffen für hoch belastete Bereiche, welche mit anderen Methoden (in erster Linie Schmelzschweißverfahren) in Kombination mit Sphäroguß bzw. GJS nicht realisierbar sind. Dies ermöglicht eine deutliche Standzeitsteigerung.

Besonders bevorzugt sind hochhartphasenhaltige Werkzeugwerkstoffe für die Beschichtung. Derartige Werkstoffe lassen sich schmelzschweißtechnisch nicht oder nur unter großen Schwierigkeiten mit einem Guß-Basiswerkstoff verbinden.

Die vorschlagsgemäße Lösung beeinflußt den Grundwerkstoff deutlicht geringer. Daher sind keine Folgeschäden in der Struktur zu befürchten. Insbesondere können bei der vorschlagsgemäßen Lösung ansonsten erforderliche Zwischenschritte, wie Zwischenglühen, entfallen.

Die vorschlagsgemäße Lösung ermöglicht eine deutliche Verkürzung der Herstellungszeit und/oder flexiblere Anpassung im Einlauf und bei der Reparatur der Bauteile bzw. Werkzeuge.

Bei der vorliegenden Erfindung ist unter dem Begriff "Herstellen" nicht nur eine Neuherstellung, sondern insbesondere auch oder ggf. nur ein Reparieren, Korrigieren, Ändern o. dgl., wie insbesondere bei Werkzeugen in der Einlaufphase und/oder bei gebrauchten Werkzeugen erforderlich, zu verstehen.

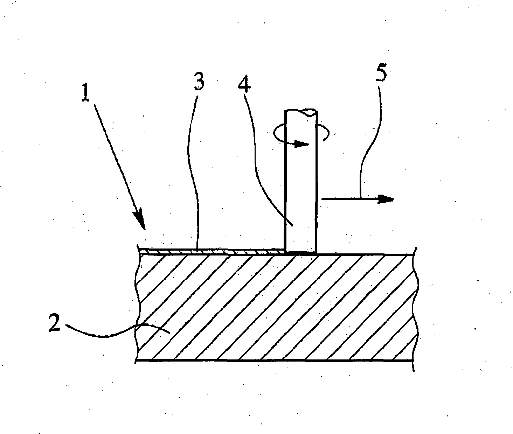

Weitere Aspekte, Merkmale, Eigenschaften und Vorteile der vorliegenden Erfindung ergeben sich aus den Ansprüchen und der nachfolgenden Beschreibung einer bevorzugten Ausführungsform anhand der Zeichnung. Die einzige Figur zeigt:
einen schematischen Schnitt eines vorschlagsgemäßen Bauteils während der Aufbringung einer Beschichtung durch Reibauftragsschweißen.

Die vorliegende Erfindung bezieht auf ein metallisches Bauteil 1 sowie auf ein Verfahren zur Herstellung des Bauteils 1 und dessen Verwendung.

Das Bauteil 1 ist insbesondere als Werkzeug, besonders bevorzugt als Umformwerkzeug, ausgebildet. Jedoch kann es sich bei dem Bauteil 1 auch um jedes sonstige Bauteil oder eine Komponente, insbesondere im oder für den Automobilbereich bzw. -bau, handeln.

Unter "Herstellen" ist bei der vorliegenden Erfindung nicht nur die Neuherstellung, sondern auch Ändern, Korrigieren, Reparieren, Verändern und/oder Neuherstellen des Bauteils 1 zu verstehen.

Das Bauteil 1 weist einen Grundwerkstoff bzw. Grundkörper 2 aus einem ersten Material, insbesondere Guß, besonders bevorzugt Sphäroguß, auf. Bei dem Sphäroguß handelt es sich vorzugsweise um GJS, insbesondere GJS700-2 o. dgl., oder vorzugsweise um GGG, insbesondere GG70L o. dgl.

Das Bauteil 1 weist ferner eine Beschichtung 3 aus einem zweiten Material auf bzw. wird damit versehen.

Das zweite Material bzw. die Beschichtung 3 ist härter und/oder verschleißbeständiger als das erste Material bzw. der Grundwerkstoff / Grundkörper 2.

Als zweites Material bzw. Beschichtungsmaterial wird vorzugsweise Stahl, insbesondere ein martensitaushärtender Stahl eingesetzt. Als zweites Material bzw. Beschichtungsmaterial wird insbesondere ein Warmarbeitsstahl oder Kaltarbeitsstahl verwendet. Jedoch kann beispielsweise auch ein Werkstoff auf Ni-Basis und/oder Pulver als zweites Material eingesetzt werden. Grundsätzlich kann auch ein partikelverstärkter Werkstoff eingesetzt werden.

Die Beschichtung 3 bzw. das zweite Material wird vorschlagsgemäß durch Reibauftragsschweißen, insbesondere unmittelbar bzw. ohne Pufferlage und/oder in einem einzigen Schritt, auf das erste Material bzw. den Grundkörper 2 aufgebracht. Jedoch ist es grundsätzlich - insbesondere bei einer nachträglichen Bearbeitung eines benutzten Bauteils 1 oder Werkzeugs - auch möglich, eine (zusätzliche) Beschichtung 3 bzw. zusätzliches zweites Material auf bereits oder noch vorhandene (Reste von) Beschichtungen 3 des Bauteils 1 durch Reibauftragsschweißen aufzubringen.

Beim Reibauftragsschweißen wird vorzugsweise ein rotierendes Element 4 aus dem zweiten Material axial auf das erste Material gedrückt und vorzugsweise quer bzw. lateral - insbesondere parallel zur Oberfläche des Grundkörpers 2 - bewegt, wie durch den Pfeil 5 angedeutet. So wird die Beschichtung 2 in vorschlagsgemäßer Weise gebildet. Um den Verbrauch des zweiten Materials zu minimieren, kann beispielsweise ein nicht dargestellter Wulstschneider o. dgl. eingesetzt werden, um am Rand des Beschichtungsauftrags entstehende Wulste zu entfernen und dieses Material ggf. wieder verwenden zu können.

Die erzeugte Reibwärme führt zu einer Plastifizierung des zweiten Materials, insbesondere ohne (relevantes) Aufschmelzen des ersten Materials im Bereich der Kontaktzone. Der Wärmeeintrag kann insbesondere durch geeignete Wahl der Hauptparameter (Drehzahl und Axialkraft sowie Durchmesser und/oder Form des Elements 4 - beispielsweise bolzenförmig, stiftförmig, zylindrisch, konisch, ringförmig, hohlzylindrisch o. dgl.) festgelegt werden. Weiter kann hierdurch und/oder durch die laterale Vorschubgeschwindigkeit die Dicke der Beschichtung 3 beeinflußt und insbesondere festgelegt werden. Die Verbindung der entstehenden Beschichtung 3 mit dem Substrat (Grundkörper 2) erfolgt insbesondere durch eine Kombination aus mechanischer und chemischer Verzahnung.

Die vorliegende Erfindung sieht insbesondere ein Aufbringen der Beschichtung 3 in einem Schritt - ganz besonders bevorzugt also ohne Erzeugen einer Pufferlage, haftvermittelten Schicht o. dgl. zwischen dem Grundkörper 2 und der Beschichtung 3 - vor.

Unabhängig davon, kann die Beschichtung 3 mehrlagig ausgebildet sein, insbesondere durch mindestens zweimaliges vorschlagsgemäßes Beschichten durch Reibauftragsschweißen.

Die üblichen Kalt- und Warmarbeitswerkzeugstoffe (Warm- und Kaltarbeitsstahl) lassen sich bereits heute wann umformen, jedoch ist dabei eine Haftung zu einem Basiswerkstoff nicht berücksichtigt. Diese Werkstoffe lassen sich vorschlagsgemäße auf einfache Weise aufbringen, insbesondere direkt auf Gruß bzw. Sphäroguß.

Die vorschlagsgemäßen Bauteile 1 sind insbesondere als Werkzeuge zur Blechbearbeitung (Umform-, Stanz-, Präge-, Zieh- oder Kantwerkzeuge) ausgebildet oder verwendbar und besonders bevorzugt in der Automobilindustrie, grundsätzlich aber auch in sonstigen Bereichen einsetzbar.

## Patentansprüche

1. Verfahren zur Herstellung eines metallischen Bauteils (1), insbesondere eines Werkzeugs, wobei ein erstes metallisches Material mit einem zweiten metallischen Material, das härter und/oder verschleißbeständiger als das erste Material ist, beschichtet wird, wobei das zweite Material durch Reibauftragsschweißen auf das erste Material aufgebracht wird,
**dadurch gekennzeichnet,**
**dass** ein martensitaushärtender Stahl als zweites Material aufgebracht wird.

2. Verfahren nach Anspruch 1, **dadurch gekennzeichnet, dass** Guß, vorzugsweise Sphäroguß, insbesondere GJS oder GGG, als erstes Material verwendet wird.

3. Verfahren nach einem der voranstehenden Ansprüche, **dadurch gekennzeichnet, dass** ein Warm- oder Kaltarbeitsstahl als zweites Material aufgebracht wird.

4. Verfahren nach einem der voranstehenden Ansprüche, **dadurch gekennzeichnet, dass** ein rotierendes Element (4) aus dem zweiten Material axial auf das erste Material gedrückt, vorzugsweise wobei das Element (4) lateral bewegt wird.

5. Verfahren nach einem der voranstehenden Ansprüche, **dadurch gekennzeichnet, dass** das zweite Material ohne Pufferlage und/oder in einem Schritt auf das erste Material aufgebracht wird.

6. Metallisches Bauteil (1), insbesondere Werkzeug, mit einem Grundkörper (2) aus Guß und mit einer Beschichtung (3) aus Stahl zur Erhöhung der Verschleißbeständigkeit,
**dadurch gekennzeichnet,**
**dass** die Beschichtung (3) aus einem durch Reibauftragsschweißen aufgebrachten martensitaushärtenden Stahl besteht.

7. Metallisches Bauteil nach Anspruch 6, **dadurch gekennzeichnet, dass** der Grundkörper (2) oder zumindest dessen beschichtete Oberfläche aus Sphäroguß, insbesondere GJS oder GGG, besteht.

8. Metallisches Bauteil nach Anspruch 6 oder 7, **dadurch gekennzeichnet, dass** der Stahl härter und/oder verschleißbeständiger als der Guß ist.

9. Metallisches Bauteil nach einem der Ansprüche 6 bis 8, **dadurch gekennzeichnet, dass** die Beschichtung (3) aus einem Warm- oder Kaltarbeitsstahl besteht.

10. Metallisches Bauteil nach einem der Ansprüche 6 bis 9, **dadurch gekennzeichnet, dass** der Beschichtung unmittelbar, insbesondere ohne Pufferlage, auf den Grundkörper (2) aufgebracht ist.

11. Metallisches Bauteil nach einem der Ansprüche 6 bis 10, **dadurch gekennzeichnet, dass** das Bauteil (1) gemäß einem der Ansprüche 1 bis 5 hergestellt ist.

12. Verwendung eines metallischen Bauteils (1) nach einem der Ansprüche 6 bis 11 als Umformwerkzeug und/oder zur Blechbearbeitung.

## Claims

1. A method for producing a metallic component (1), in particular a tool, wherein a first metallic material is coated with a second metallic material that is harder and/or more wear resistant than the first material, wherein the second material is applied to the first material through friction build-up welding,
**characterised in that**
a maraging steel is applied as the second material.

2. Method according to claim 1, **characterised in that** preferably nodular cast iron, especially GJS or GGG, is used as the first material.

3. Method according to any one of the preceding claims, **characterised in that** a hot or cold working steel is used as the second material.

4. Method according to any one of the preceding claims, **characterised in that** a rotating element (4) made of the second material is axially pressed onto the first material, preferably wherein the element (4) is moved laterally.

5. Method according to any one of the preceding claims, **characterised in that** the second material is applied to the first material without a buffer layer and/or in one step.

6. Metallic component (1), in particular a tool, having a base body (2) made of cast iron and with a coating (3) made of steel to increase the wear resistance,
**characterised in that**
the coating (3) consists of a maraging steel applied by friction build-up welding.

7. Metallic component according to Claim 6, **characterised in that** the base body (2) or at least its coated surface is made of nodular cast iron, in particular GJS or GGG.

8. Metallic component according to Claim 6 or 7, **characterised in that** the steel is harder and/or more wear resistant than the cast iron.

9. Metallic component according to any one of the claims 6 to 8, **characterised in that** the coating (3) consists of a hot or cold working steel.

10. Metallic component according to one of the claims 6 to 9, **characterised in that** the coating is applied directly to the base body (2) in particular without a buffer layer.

11. Metallic component according to one of the claims 6 to 10, **characterised in that** the component (1) is prepared according to any one of the claims 1 to 5.

12. Use of a metallic component (1) according to any ane of the claims 6 to 11 as a forming tool and/or for sheet metal working.

## Revendications

1. Procédé de fabrication d'un composant métallique (1), plus particulièrement d'un outil, où un premier matériau métallique étant revêtu avec un deuxième matériau métallique qui est plus dur et/ou plus résistant à l'usure que le premier matériau, le deuxième matériau étant appliqué sur le premier matériau par soudage à superposition par friction,
**caractérisé en ce que**
un acier maraging est appliqué en tant que deuxième matériau.

2. Procédé selon la revendication 1, **caractérisé en ce qu'**une fonte, de préférence une fonte sphéroïdale, plus particulièrement GJS ou GGG est utilisée en tant que premier matériau.

3. Procédé selon l'une des revendications précédentes, **caractérisé en ce qu'**un acier usinable à chaud ou usinable à froid est appliqué en tant que deuxième matériau.

4. Procédé selon l'une des revendications précédentes, **caractérisé en ce qu'**un élément rotatif (4) constitué du deuxième matériau est pressé axialement contre le premier matériau, de préférence l'élément (4) étant déplacé latéralement.

5. Procédé selon l'une des revendications précédentes, **caractérisé en ce que** le deuxième matériau est appliqué sur le premier matériau sans couche tampon et/ou en une seule étape.

6. Composant métallique (1), plus particulièrement un outil, avec un corps de base (2) en fonte avec un revêtement (3) en acier pour l'augmentation de la résistance à l'usure,
**caractérisé en ce que**
le revêtement (3) est constitué d'un acier martensitique durcissable appliqué par soudage à superposition par friction.

7. Composant métallique selon la revendication 6, **caractérisé en ce que** le corps de base (2) ou au moins sa surface revêtue est constituée d'une fonte sphéroïdale, plus particulièrement GJS ou GGG.

8. Composant métallique selon la revendication 6 ou 7, **caractérisé en ce que** l'acier est plus dur et/ou plus résistant à l'usure que la fonte.

9. Composant métallique selon l'une des revendications 6 à 8, **caractérisé en ce que** le revêtement (3) est constitué d'un acier usinable à chaud ou d'un acier usinable à froid.

10. Composant métallique selon l'une des revendications 6 à 9, **caractérisé en ce que** le revêtement est appliqué directement, plus particulièrement sans couche tampon, sur le corps de base (2).

11. Composant métallique selon l'une des revendications 6 à 10, **caractérisé en ce que** le composant (1) est fabriqué selon l'une des revendications 1 à 5.

12. Utilisation d'un composant métallique (1) selon l'une des revendications 6 à 11 en tant qu'outil de formage et/ou de traitement de tôles.
